Europäisches Patentamt

European Patent Office

Office européen des brevets

(11) Veröffentlichungsnummer: **0 265 530**
**A1**

## (12) EUROPÄISCHE PATENTANMELDUNG

(21) Anmeldenummer: 86113361.9

(51) Int. Cl.⁴: **B23K 1/19**

(22) Anmeldetag: 29.09.86

(43) Veröffentlichungstag der Anmeldung:
04.05.88 Patentblatt 88/18

(84) Benannte Vertragsstaaten:
**AT BE CH DE FR GB IT LI LU NL SE**

(71) Anmelder: **Verwaltungsgesellschaft Heinrich Neitz GmbH & Co. KG**
**Bielefelder Strasse 326**
**D-4930 Detmold 1(DE)**

(72) Erfinder: **Neitz, Günter**
**Körner Strasse 10,**
**D-4930 Detmold(DE)**

(74) Vertreter: **Hanewinkel, Lorenz, Dipl.-Phys.**
**Patentanwalt Ferrariweg 17a**
**D-4790 Paderborn(DE)**

(54) **Verfahren zum Löten von Aluminiumteilen.**

(57) Bei einem Verfahren zum Löten von Aluminiumteilen, insbesondere Wärmetauschern, werden die Aluminiumteile von der Zuführstelle bis zur Abgabestelle in einem kontinuierlich-intermittierendem Durchlauf nacheinander

a) entfettet (gereinigt),
b) mit einem Flußmittel appliziert,
c) erwärmt und gelötet,
d) gekühlt,
e) gewaschen,
f) in ein Behandlungsbad eingetaucht,
g) gebeizt,
h) abgespült und
i) warmbehandelt (getrocknet),

wobei die Aluminiumteile mindestens während der Reingung, der Flußmittelapplikation und des Lötens, vorzugsweise während sämtlicher Verfahrensschritte, jeweils hermetisch abgeschlossen behandelt werden.

EP 0 265 530 A1

## Verfahren zum Löten von Aluminiumteilen

Die Erfindung betrifft ein Verfahren zum Löten von mit Flußmittel (Lötmittel) beschichteten Aluminiumteilen, insbesondere Wärmetauschern und Kühlern, bei dem erhitzte Luft und/oder Schutzgas über die und/oder durch die Aluminiumteile bewegt wird.

Es ist bekannt, mit Lötmittel beschichtete Aluminiumteile in Durchlauföfen stufenweise in aneinander anschließenden Zonen zu erhitzen bis das Lot schmilzt, wonach eine Abkühlung und Reinigung des gelöteten Gegenstandes in einer nachfolgenden Zone erfolgt. In den Zonen erfolgt eine Zwangsbelüftung mit erhitzter Luft, deren Temperatur möglichst genau auf eine je Zone vorgegebene Temperatur geregelt wird.

Die Aluminiumteile werden schrittweise oder kontinuierlich durch die Zonen gefördert.

Bei dem bekannten Verfahren ist jedoch in ungünstiger Weise eine nicht unerhebliche Korrosionsbildung durch Flußmittelrückstände, Dämpfe, an Aluminiumteilen und Vorrichtungen der Lötanlage nicht zu vermeiden, was sich insgesamt unwirtschaftlich auf die Verfahrensweise und die gelöteten Teile auswirkt.

Es ist deshalb Aufgabe der Erfindung, ein Verfahren zu schaffen, mit dem bei besonderen Durchlaufvorkehrungen und günstigen Vor-, Löt-und Nachbehandlungen ein wirtschaftliches und mit höchster Qualität ausführbares, manuelle Handhabungen und somit Beschädigungen an den zu lötenden Teilen ausschließendes Löten ermöglicht wird und dabei gleichzeitig Korrosionsgefahren an den das Verfahren durchführenden Bauteilen weitestgehend ausgeschlossen werden.

Diese Aufgabe wird erfindungsgemäß durch die kennzeichnenden Merkmale des Patentanspruches 1 gelöst und die in den Unteransprüchen aufgeführten Gestaltungsmerkmale stellen vorteilhafte Weiterbildungen der Aufgabenlösung dar.

Das erfindungsgemäße Verfahren erstreckt sich nicht nur auf die Merkmale der einzelnen Ansprüche, sondern auch auf deren Kombination; auch werden in den das Verfahren durchführenden technischen Mitteln erfinderische Punkte gesehen.

Das erfindungsgemäße Verfahren ermöglicht durch die besonderen Durchlaufvorkehrungen und günstigen Vor-, Löt-und Nachbehandlungen im kontinuierlich-intermittierendem Durchlauf ein wirtschaftliches und mit höchster Qualität ausführbares Löten von Aluminiumteilen, insbesondere Wärmetauschern.

Durch die Abschottung mindestens einzelner, vorzugsweise aller Verfahrensabschnitte gegeneinander können sich diese nicht gegenseitig beeinflussen und in jedem Abschnitt wird der Verfahrensschritt hermetisch abgeschlossen und somit einwandfrei durchgeführt, was die Korrosionsbildung an den Bauteilen der Lötanlage praktisch auf Null herabsetzt und damit die hohe Qualität der gelöteten Teile und lange Standzeit der Lötanlage ergibt.

Weiterhin ermöglicht diese Abschottung auch eine präzise Steuerung der Temperaturen und Strömungsverhältnisse des Gas-/Luftaustausches.

Das Verfahren läuft prozessorgesteuert ab, wodurch kurzfristig auf andere Produkte (kleinere oder größere, dickere oder dünnere Wärmetauscher) umgeschaltet werden kann - sehr einfache und genaue Steuerung und Umsteuerung der gesamten Lötanlage auf andere Lötprogramme unter jeweiliger Beachtung der erforderlichen Prozeßparameter.

Jeder Verfahrensabschnitt ist modular ausgeführt, so daß die Zonen aneinanderreihbar sind und auch einzelne Zonen weggelassen bzw. weitere Zonen in den Gesamt-Verfahrensablauf zwischengeschaltet werden können.

Durch den kontinuierlich-intermittierenden Durchlauf der zu lötenden Teile von der Aufgabe bis zur Abgabe und ggf. auch beim erneuten Rücklauf für ein Nachlöten sind keine manuellen Handhabungen in und zwischen den einzelnen Zonen erforderlich, was eine erhebliche Personaleinsparung ergibt und Beschädigungen an den Teilen ausschließt.

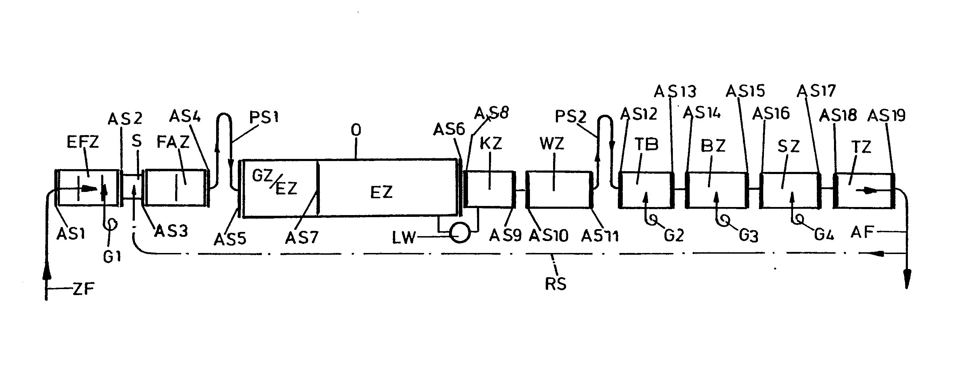

Anhand der Zeichnung wird nachfolgend ein Ausführungsbeispiel gemäß der Erfindung näher erläutert. Dabei zeigt die einzige Figur eine - schematische Darstellung der nacheinander Behandlungsschritte zum Löten von Aluminiumteilen von der Zuführ-bis zur Abführstelle.

Zu lötende Aluminiumteile, insbesondere Wärmetauscher (Kühler), werden durch das erfindungsgemäße Verfahren im Durchlauf zuerst einer Vorbehandlung (Vorbereitung für den Lötprozeß), dann dem Lötprozeß und anschließend einer Nachbehandlung (Reinigung, Wärmebehandlung und Trocknung) unterworfen.

Hierbei werden die Aluminiumteile von der Zuführstelle ZF (Aufgabe) bis zur Abführstelle AF (Abgabe) in einem kontinuierlich-intermittierendem Durchlauf nacheinander entfettet (gereinigt), mit einem Flußmittel appliziert, gelötet, gekühlt, gewaschen, in ein Bad eingetaucht, gebeizt, abgespült und getrocknet (wärmebehandelt), wobei die Aluminiumteile mindestens während des Entfettens, der Flußmittelapplikation und des Lötens und des Nachbehandelns jeweils hermetisch abgeschlossen behandelt werden, vorzugsweise auch in allen nachfolgenden Zonen.

Jedes Aluminiumteil wird durch die Zuführung ZF zuerst in die Entfettungszone EFZ (Reinigungszone) eingefahren, in der das Aluminiumteil in einer wässerigen Lösung mit Entfetter oder Lösemittelentfetter beim Durchlauf zuerst entfettet, anschließend gespült und danach mit Luft abgeblasen und somit vorgetrocknet wird; die Entfettungs-Zone EFZ beinhaltet also in sich drei hintereinander erfolgende Behandlungsschritte, nämlich Entfetten in der wässerigen, Entfettmittel enthaltenden Lösung (Lösemittel-Entfetter), Spülen in Wasser und Abblasen und somit Vortrocknen durch Luft. Das Abblasen erfolgt durch ein in die Entfettungszone EFZ integriertes Gebläse (G1) (Warm-und/oder Kaltluftumwälzer).

Durch das Abblasen und Vortrocknen der Aluminiumteile wird gewährleistet, daß kein Wasser von den Aluminiumteilen mit in die nachfolgende Flußmittel-Applikationszone FAZ mitgeschleppt und dadurch das Flußmittel verdünnt wird.

Die Entfettungszone EFZ ist an ihrer Eingangsseite und an ihrer Ausgangsseite für die Aluminiumteile durch eine Abschottung AS1, AS2 hermetisch abgeschlossen, so daß die Aluminiumteile während des Entfettens keiner Beeinflussung von außen unterliegen.

Nach dem Entfetten verläßt jedes Aluminiumteil die Entfettungszone EFZ und wird über eine Schleuse S in die Flußmittel-Applikationszone FAZ hineinbewegt. Diese Flußmittel-Applikationszone FAZ ist ebenfalls an ihrer Eingangs-und Ausgangsseite durch eine Abschottung AS3, AS4 hermetisch abgeschlossen, so daß eine einwandfreie, keine Störungen von außen unterliegende Flußmittel-Applikation während des Durchlaufes der Aluminiumteile durch die Zone FAZ erfolgt.

Die Flußmittel-Applikationszone FAZ ist eine roboterbetriebene Zone, in der gezielt nur die zu lötenden Bereiche (Lötstellen) der Aluminiumteile mit Flußmittel benetzt werden. Es erfolgt hier also nur ein Besprühen der zu lötenden Aluminiumflächen, wodurch die die Zone FAZ umgebenden und darin angeordneten Bauteile gegen Flußmittelbesprühung verschont werden, wodurch eine Korrosionsbildung an den Bauteilen der Zone FAZ und auch in den nachfolgenden Zonen GZ/EZ bis TZ drastisch reduziert wird.

Der entstehende Flußmitteldunst (-nebel, -staub) in der Zone FAZ wird abgesaugt und zur Rückgewinnung von Flußmittel über einen Zyklon geführt.

Nach der Flußmittel-Applikation verlassen die Aluminiumteile die Zone FAZ und werden über eine Pufferstrecke PS1, die als Überführungs-und als Wartestrecke dient, dem Lötofen O zugeführt.

Der Lötofen setzt sich aus einer gas-oder elektrisch beheizten Zone GZ/EZ und einer dieser nachgeschalteten elektrisch beheizten Zone EZ zusammen, wobei beide Zonen GZ/EZ, EZ gegeneinander durch eine Abschottung AS7 hermetisch getrennt sind.

Die gasbeheizte Zone GZ/EZ hat an der Eingangsseite eine Abschottung AS5 und die elektrisch beheizte Zone EZ an der Ausgangsseite eine Abschottung AS6, und zwischen beiden Zonen GZ/EZ, EZ befindet sich die Abschottung AS7, wodurch die beiden Zonen GZ, EZ gegeneinander und der gesamte Ofen O nach außen hin hermetisch abgeschlossen ist.

Der Ofen kann mit einer Vielzahl an Zonen und Abschnitten mit gas-und elektrischer Beheizung ausgestaltet sein.

Beide Zonen GZ/EZ, EZ lassen sich dabei in mehrere Abschnitte unterteilen. Die gasbeheizte Zone GZ/EZ bildet die Aufheizzone für die Aluminiumteil und in der elektrisch beheizten Zone EZ werden die Aluminiumteile gelötet.

In jedem Abschnitt der beiden Zonen GZ/EZ, EZ ist eine Heizung und ein steuerbarer Lüfter angeordnet und diese Lüfter treiben die Umwälzluft/Gas durch die mittels einer Tranportvorrichtung in Phasen durch die Zonen GZ/EZ, EZ bewegten zu lötenden Teile hindurch und die Umwälzluft/Gas durchströmt und/oder umspült die zu lötenden Teile.

Ein Temperaturmelder für die Ofentemperatur vor den zu lötenden Teilen und mindestens ein Temperaturmelder für die Austrittstemperatur hinter den gelöteten Teilen sind in der Luft-/Gasströmung angeordnet.

Weiterhin ist den zu lötenden Teilen eine Stützheizung zugeordnet, so daß die Teile von der regelbaren Ofenheizung Konvektionswärme und von der ebenfalls regelbaren Stützheizung Strahlwärme für einen gleichmäßigen Temperaturanstieg und eine gleichmäßige Durchwärmung von beiden Seiten des Teiles erhält.

Der Aufheizvorgang der zu lötenden Aluminiumteile wird mit einer derartigen Geschwindigkeit und Luftanströmung durchgeführt, daß die in einer Haltevorrichtung tranportierten Teile keine Verschiebungen gegeneinander erleiden und das Löt-und Flußmittel zwischen den Teilen haften bleibt. Die steuerbaren Lüfter werden jeweils unterhalb einer unteren Grenztemperatur von einer Anfangsgeschwindigkeit entsprechend einer maximalen Luft-/Gasgeschwindigkeit ausgehend, bei zunehmender Annäherung an eine vorgegebene obere Grenztemperatur bis auf eine minimale Endgeschwindigkeit entsprechend einer Minimalluftgeschwindigkeit gesteuert betrieben. Die Temperatur des Lötobjektes wird dabei aus der Austrittstemperatur der umlaufenden Luft des Gases bestimmt.

Nach Erreichen der oberen Grenztemperatur in dem Lötofen, die zweckmäßig einige Grade Kelvin über der Lötendtemperatur festgelegt wird, wird einer vorgegebene Nachlötzeit abgewartet bis der Lötvorgang, d.h. die Lötphase, beendet wird.

Die Lötendtemperatur kann vorbekannt sein; sie wird aber vorteilhaft aus dem Temperaturverlauf der Abluft direkt bestimmt. In dem Aufheizzeitraum nimmt die Temperatur gemäß der spezifischen Wärme relativ schnell zu. Sobald das Lot bei der Lötanfangstemperatur zu schmelzen beginnt, wird Schmelzwärme aufgenommen, die zu einem verlangsamten Temperaturanstieg in der Lötphase führt. Wenn bei der Lötendtemperatur alles Lot geschmolzen ist, steigt die Temperatur weiter sprunghaft auf einen Endwert an. Es wird die Temperatur fortlaufend in bestimmten Zeitabständen, die kurze gegenüber der Lötzeit sind, gemessen, und aus den laufend zwischen Folgemeßwert bestimmten Meßwertdifferenzen wird durch fortlaufenden Vergleich derselben die relativ starke Zunahme der Steigung ermittelt. Aus dieser Temperatur wird auch die Vorgabetemperatur für die Regelung der Ofentemperatur bzw. der Ofenheizung bestimmt, und die Steuerung des Teiltransportes eingeleitet.

Die gelöteten Aluminiumteile werden aus dem Ofen O heraus in die Kühlzone KZ mit Abschottung AS8, AS9 gefahren, in der die Abkühlung durch Temperaturüberwachung bestimmt wird. Die Abkühlung der gelöteten Teile erfolgt bis zu einer vorgegebenen Austrittstemperatur durch Umwälzluft, worauf dann eine Wasserbesprühung eingeschaltet wird, die in einem vorgegebenen Zeitraum eine Abschreckung der gelöteten Teile bewirkt.

Anschließend durchläuft jedes gelötete und abgekühlte Teil die abgeschottete (AS10, AS11) Waschzone WZ, in der eine Waschung mit Kalt-/Warmwasser erfolgt. Eine zwischengeschaltete Pufferstrecke PS2, die wiederum als Überführungs- und Wartestrecke dient, bringt die gelöteten Teile von der Waschzone WZ in eine Tauchbad TB mit Abschottung AS12, AS13, in dem mittels einer Flüssigkeit das restlose Abwaschen von Flußmittelrückständen außen un auch im Inneren (den Hohlräumen) der gelöteten Teile (Wärmetauscher) erfolgt, wobei während des Tauchvorganges eine intensive Umwälzung der im Tauchbad TB befindlichen Flüssigkeit zur einwandfreien Abwaschung des Rest-Flußmittels durchgeführt wird.

Nach dem Tauchvorgang durchlaufen die gelöteten Teile nacheinander eine abgeschottete (AS14, AS15) Beizzone BZ, in der die Teile mit einer flüssigen Beize zwecks Passivierung der Teiloberfläche behandelt werden, und ein abgeschottete (AS 16, AS 17) Spülzone SZ, in der mit einem flüssigen Spülmittel die Beizrückstände von den Aluminiumteilen entfernt werden.

Zum Abschluß durchlaufen die gelöteten Aluminiumteile eine Warmbehandlungszone TZ mit Abschottung AS18, AS19, in der sie durch Warmluft getrocknet werden.

Die Verweilzeiten in den jeweiligen Zonen EFZ, FAZ, KZ, WZ, TB, BZ, SZ, und TZ sind steuerbar und abhängig von der Größe des Lötgutes, deren Gestaltung und der Anzahl der Lötstellen.

Nach dem Auftauchen der gelöteten Teile aus dem Tauchbad TB wird mittels Luft anhaftende Flüssigkeit abgeblasen, was durch ein Gebläse G2 erfolgt. Hierdurch wird eine Flüssigkeitsverschleppung in die nachfolgende Beizzone BZ und somit Beeinträchtigung der Beize verhindert.

Nach dem Beizen und Spülen wird ebenfalls durch Gebläse G3, G4 Luft auf die Teile geblasen und somit anhaftende Flüssigkeit abgeblasen und eine Flüssigkeitsverschleppung in jeweils die nachfolgende Zone SZ, TZ verhindert.

Die Gebläse G1 bis G4 sind vorzugsweise jeweils am Ausgang der Zonen EFZ, TB, BZ und SZ angeordnet.

Die zu lötenden Teile werden derart hängend durch die Zonen, in denen eine Flüssigkeitsbehandlung erfolgt, und zwar die Zonen EFZ, KZ, WZ, TB, BZ und SZ transportiert, daß die in ihre Hohlräume eingedrungene Flüssigkeit automatisch aus den Teilen herausläuft - es erfolgt also ein schräghängender Transport durch einen Förderer in Ketten-, Rollen-oder Wagen-/Schlittenform.

Im Bereich des Ofens O und der Kühlzone KZ ist ein Luftwäscher LW integriert, der die abgeführte Prozeßluft reinigt und als Reinluft in die Atmosphäre abgibt, wordurch eine schädliche Belastung der Umwelt verhindert wird.

Weiterhin ist der aus allen Zonen und dem Ofen bestehenden Gesamtanlage (Vorbehandlungs- , Löt-und Nachbehandlungsanlage/-Vorrichtung) eine Wasser-und Flüssigkeitsaufbereitung nachgeschaltet, in der das Wasser und die Flüssig keiten wieder nutzbar gemacht und zu einzelnen Zonen zurückgeführt werden.

Gelötete Teile, die eine Nachlötung erfordern, werden von der Abführung AF aus über eine Rückführstrecke RS zur Schleuse S zurückgeführt und durchlaufen dann von der Schleuse S aus nochmals alle nachgeschalteten Zonen FAZ bis TZ.

**Ansprüche**

1. Verfahren zum Löten von Aluminiumteilen, insbesondere Wärmetauschern, dadurch gekennzeichnet, daß die Aluminiumteile von der Zuführstelle bis zur Abgabestelle in einem kontinuierlich-intermittierendem Durchlauf nacheinander

a) entfettet (gereinigt),
b) mit einem Flußmittel appliziert,
c) erwärmt und gelötet,
d) gekühlt,
e) gewaschen,
f) in ein Behandlungsbad eingetaucht,
g) gebeizt,
h) abgespült und
i) warmbehandelt (getrocknet)

werden, wobei die Aluminiumteile mindestens während der Reinigung, der Flußmittelapplikation und des Lötens, vorzugsweise während sämtlicher Verfahrensschritte, jeweils hermetisch abgeschlossen behandelt werden.

2. Verfahren nach Anspruch 1, dadurch gekennzeichnet, daß die zu lötenden Aluminiumteile von der Zuführung (ZF) aus durch eine an ihrer Eingangsseite und ihrer Ausgangsseite durch eine Abschottung (AS1, AS2) hermetisch abgeschlossene Entfettungszone (BFZ) laufen, in der die Aluminiumteile in einer wässerigen, Entfettungsmittel enthaltenden Lösung zuerst entfettet, anschließend gespült oder einer Lösemittelreinigung unterzogen und danach mit Luft abgeblasen und somit vorgetrocknet werden.

3. Verfahren nach den Ansprüchen 1 und 2, dadurch gekennzeichnet, daß die entfetteten Aluminiumteile über eine Schleuse (S) aus der Entfettungszone (BFZ) in eine an ihrer Eingangsseite und ihrer Ausgangsseite durch eine Abschottung (AS3, AS4) hermetisch abgeschlossene Flußmittel-Applikationszone (FAZ) laufen, in der die Aluminiumteile an ihren zu lötenden Flächen gezielt mit Flußmittel benetzt werden.

4. Verfahren nach den Ansprüchen 1 bis 3, dadurch gekennzeichnet, daß die mit Flußmittel applizierten Aluminiumteile von der Flußmittel-Applikationszone (FAZ) über eine Pufferstrecke (PS1) in einen an seiner Eingangsseite und seiner Ausgangsseite durch eine Abschottung (AS5, AS6) hermetisch abgeschlosenen Lötofen (O) laufen, indem sie in einer gas-oder elektrischbeheizten Zone (GZ/EZ) aufgeheizt und in einer nachgeschalteten, gegenüber der Gas/Elektrozone (GZ/EZ) durch eine Abschottung (AS7) hermetisch abgeschlossene, elektrisch beheizte Zone (EZ) gelötet werden, wobei die Aufheiz-und Löttemperaturen sowie Luftgeschwindigkeiten in beiden Zonen (GZ, EZ) regel-und zeitgesteuert und der Teiletransport gesteuert werden.

5. Verfahren nach den Ansprüchen 1 bis 4, dadurch gekennzeichnet, daß die Aluminiumteile nach dem Lötprozeß eine mit Abschottung (AS8, AS9) ausgestaltete Kühlzone (KZ) durchlaufen, in der sie mittels Luft und/oder Wasser abgekühlt werden.

6. Verfahren nach den Ansprüchen 1 bis 5, dadurch gekennzeichnet, daß die abgekühlten Aluminiumteile eine mit Abschottung (AS 10, AS 11) ausgestattete Waschzone (WZ) durchlaufen, indem sie mit Kalt/Warmwasser abgewaschen werden.

7. Verfahren nach den Ansprüchen 1 bis 6, dadurch gekennzeichnet, daß die abgewaschenen Aluminiumteile über eine Pufferstrecke (PS2) einem abgeschotteten (AS 12, AS13) Tauchbad (TB) mit umgewälzter Flüssigkeit zugeführt werden, in der die Aluminiumteile außen und innen von anhaftenden Flußmittelrückständen abgewaschen und restlos gereinigt werden.

8. Verfahren nach den Ansprüchen 1 bis 7, dadurch gekennzeichnet, daß die aus dem Tauchbad (TB) kommenden Aluminiumteile eine abgeschottete (AS14, AS15) Beizzone (BZ) durchlaufen, in der sie in einer Beizflüssigkeit zwecks Passivierung der Teiloberfläche behandelt werden.

9. Verfahren nach den Ansprüchen 1 bis 8, dadurch gekennzeichnet, daß die gebeizten Aluminiumteile eine abgeschottete (AS16, AS17) Spülzone (SZ) durchlaufen, in der mit einem flüssigen Spülmittel die Beizrückstände von den Aluminiumteilen abgespült werden.

10. Verfahren nach den Ansprüchen 1 bis 9, dadurch gekennzeichnet, daß die Aluminiumteile eine Warmbehandlungszone (TZ) mit Abschottung (AS18, AS19) durchlaufen, in der sie durch Warmluft getrocknet und warmbehandelt werden.

11. Verfahren nach den Ansprüchen 1 bis 10, dadurch gekennzeichnet, daß die Aluminiumteile im Ausgangsbereich der Entfettungszone (EFZ), des Tauchbades (TB), der Beizzone (BZ) und der Spülzone (SZ) mit Luft abgeblasen (G1 bis G4) werden, durch die zur Verhinderung von Flüssigkeitsverschleppungen in die jeweils nachfolgende Zone die anhaftende Flüssigkeit von den Aluminiumteilen entfernt wird.

12. Verfahren nach den Ansprüchen 1 bis 11, dadurch gekennzeichnet, daß die Aluminiumteile derart hängend durch die Flüssigkeitsbehandlungen durchführenden Zonen (BFZ, KZ, WZ, TB, BZ und SZ) bewegt werden, daß die in ihre Hohlräume eingedrungene Flüssigkeit selbsttätig aus den Aluminiumteilen herausläuft.

13. Verfahren nach den Ansprüchen 1 bis 12, dadurch gekennzeichnet, daß nachzulötende Aluminiumteile von der Abführung (AF) über eine Rückführstrecke (RS) zu der Schleuse (S) für einen erneuten Durchlauf zurückgebracht werden.

EFZ  AS2  AS4  PS1  O  AS6  AS8  PS2  AS12  AS13  AS15  AS17
S  FAZ  KZ  WZ  AS14  AS16  AS18  AS19

GZ/EZ  EZ  TB  BZ  SZ  TZ

AS1  AS3  AS5  AS7  LW  AS9  AS10  AS11  G2  G3  G4  AF

G1  ZF  RS

0 265 530

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 185 946  (SOCIETE ANONYME DES USINES CHAUSSON) * Seite 4, Zeilen 22-28; Seite 8, Zeilen 27-34; Seite 9, Zeilen 11-24;  Seite 9, Zeile 36 - Seite 10, Zeile 6;  Seite 10, Zeilen 16-33;  Seite 11, Zeilen 21-37; Anspruch 11 * | 1,2,5-11 | B 23 K    1/19 |
| A | FR-A-2 419 131  (TOYO RADIATOR CO., LTD. et al.) * Seite 2, Zeilen 7-21; Seite 3, Zeile 11 - Seite 5, Zeile 3; Seite 5, Zeile 19 - Seite 6, Zeile 1; Figuren 1,2 * | 1,4 | |
| A | DE-A-2 018 615  (FABRICA DE RADIATOARE SI CABLURI BRASOV) * Seiten 3-7; Anspruch 1 * | 1,5,8 | |
| A | FR-A-2 291 821  (SOCIETE ANONYME DES USINES CHAUSSON) * Insgesamt * | 1,7,11-13 | |

RECHERCHIERTE SACHGEBIETE (Int. Cl.4)

B 23 K

Der vorliegende Recherchenbericht wurde für alle Patentansprüche erstellt.

| Recherchenort | Abschlußdatum der Recherche | Prüfer |
|---|---|---|
| DEN HAAG | 09-06-1987 | ARAN D.D. |